# EUROPEAN PATENT APPLICATION

(11) **EP 2 822 287 A1**
(43) Date of publication of application: **07.01.2015**
(21) Application number: 13305934.5
(22) Date of filing: 01.07.2013
(51) Int. Cl.: H04N 21/44, H04N 21/43

(54) **Method and apparatus for frame accurate advertisement insertion**

(71) Applicant: Thomson Licensing, 92130 Issy-les-Moulineaux (FR)
(72) Inventor: Neumann, Christoph, 35700 Rennes (FR); Defrance, Serge, 35700 Rennes (FR); Onno, Stéphane, 35760 Saint-Grégoire (FR)
(74) Representative: Rossmanith, Manfred

(57) **Abstract**

A method and an apparatus for inserting content into a transmitted video stream without modifying the original content is suggested. The transmission of videos stream is performed by broadcasting or multicasting. The insertion of content works in real-time and does not require computing overhead compared to conventional solutions. Synchronization of the original videos stream and the transmitted video stream is required for properly inserting the content. This synchronization is performed in two steps. A first step involves a coarse synchronization and in a second step a fine synchronization is applied to the result of the coarse synchronization. The coarse synchronization is based on audio-fingerprints while the fine synchronization is based on video fingerprints. The insertion of content is unsusceptible to processing or transformation steps of the original video along the broadcast or multicast chain.

## Description

### Field

The present invention is related to an apparatus and method for inserting advertisements into video sequences. In particular, the present invention is related to a method 1 and an apparatus for frame accurate insertion of content.

### Background

Broadcasting companies or broadcasters transmit news, shows, sports events and films as programs to viewers who receive the programs through terrestrial, satellite and/or cable broadcast signals. For the business model of broadcasters, advertisements accompanying their programs are very important. It is common practice that broadcasters include advertisements in dedicated advertisement breaks during a program. With the emergence of TV receivers offering time shift recording and viewing functionality, many viewers tend to skip the advertisement breaks by jumping forward in the recorded program or by switching into the fast forward mode. The reason for doing so is that first of all most of the times the advertisements are not relevant for the majority of the viewers and, secondly, it is very easy to avoid the advertisement breaks utilizing the time-shift functionality. Under such circumstances the main goal of the client of the broadcaster who is paying for the advertisement placement is missed because the advertisement does not reach out anymore to potential customers of the company who has placed the advertisement.

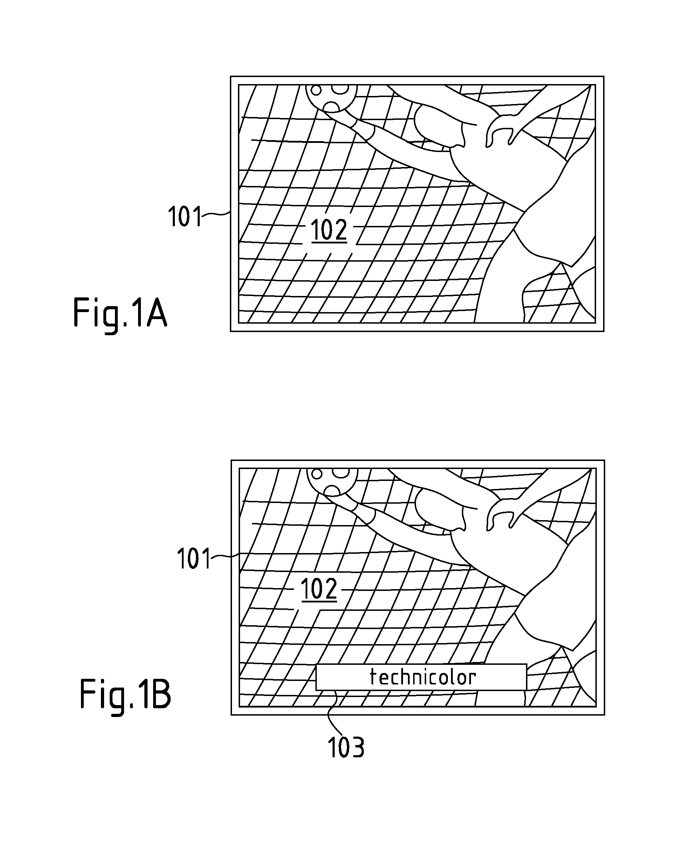

The obvious weakness of placing advertisements in advertisement breaks can be alleviated by embedding the advertisement in the program itself. The simplest approach for embedding the advertisement is to create a composed image by inserting the advertisement as a text box or banner into a number of video frames of the broadcasted program. This concept is known from prior art and will be explained in greater detail with reference to figures 1A and 1B.

A more elegant approach is to insert the advertisement as an integral part of the video sequence e.g. displaying the advertisement on a billboard shown in a video sequence. However, in order to create a good impression and maintain a natural look of the composed image, the advertisement needs to be adapted to the rest of the scene in the video sequence. Typically, this approach requires human intervention to obtain results of good quality.

The measures described so far aim at making it for the viewer practically impossible to avoid the advertisement but completely fail to make the advertisement more relevant for the viewer. In order to address this issue, the displayed advertisement needs to take into account individual interests of the viewer or in other words the advertisements need to be targeted to the viewer.

The approach of providing targeted content is known from video games. The selection of the advertisements is made by means of individual information stored in a game console of a videogame. WO 2007/041 371 A1 describes how the user interactions in a video game are used to target advertisements. E.g. if the user selects a racing car of a specific brand, then an advertisement of the same brand is displayed in the video game. The insertion of targeted content in video games is comparatively simple because the creator of the video game has full control of the scenery and can therefore provide scenes that are suitable for advertisement insertion. In addition, in a video game the video processing is completely controlled inside the video console. In a broadcast environment the insertion of targeted content is more complex.

In the co-pending European patent application EP 13 305 151.6 of the same applicant, it is suggested to identify in a video sequence a set of frames appropriate for inserting advertisements as targeted content. According to that method two sets of meta-data are created. The first set of metadata relates to the video content, e.g. frame numbers of those frames susceptible for inlaying the advertisement, coordinates where the advertisement should be placed, a geometrical shape of the advertisement, the used color map, light setting, etc. A second group of meta-data provides information that is required for selecting the appropriate content in the video sequence. The second set of meta-data comprises therefore information about the inserted content itself, the context of the scene, the distance of a virtual camera, etc. The method of inserting targeted content described in EP 13 305 151.6 works well as long as all meta-data are completely available.

However, in a video broadcast system the video signal is transformed along its distribution chain from the broadcaster to the premises of the viewer. It may be transcoded, re-encoded, converted from digital to analog signals and vice versa, audio tracks may be edited or removed or changed. These transformations are generally not under the control of a single entity. Therefore, time markers or any other meta-data may get lost during these transformations. Potential remedies for this problem are video and/or audio watermarks. Video and audio watermarks are not susceptible to the mentioned transformations and could therefore serve as invariable markers in the video and/or audio sequence. However, content owners do not always accept to include watermarks because they are concerned by a potential negative effect on the quality perception of the viewer. Some broadcasters refuse to include watermarks because they do not want to modify the content broadcast workflow.

Also for the following reasons watermarking is not a preferred technology for the sole purpose of synchronization of two video streams. Watermarking is based on a symmetric key for embedding and decoding the watermarks. The key and the process of watermarking must be based on secure hardware which is too costly for many consumer electronics applications. In addition to that, scaling watermarking for a large number of devices is also an issue.

Video fingerprinting is another technique that may provide frame accurate synchronization of two broadcasted or multicasted video streams [MR1]. However, matching a video fingerprint (signatures) extracted by the video player against all signatures of the video provided by the server is costly and cannot be carried out in real-time by a set top box (STB).

Therefore, there remains a need for a solution to insert targeted content like advertisements with frame accuracy into a sequence of video frames especially in a broadcast or multicast environment where meta-data cannot be relied upon.

### Summary of invention

The present invention suggests a method and an television receiver for inserting content with frame accuracy into a transmitted video stream without modifying the original content. The term "transmitted" or "transmission" includes broadcasting as well as multicasting utilizing any kind of appropriate medium for doing so. The invention works in real-time and does not require computing overhead compared to conventional solutions. A further advantage is that the invention is unsusceptible to processing or transforming steps of the original video along the broadcast chain.

According to a first aspect, the present invention suggests a method of content insertion into a transmitted video stream. The method comprises the following steps:
- processing a first video stream provided with meta-data;
- storing the meta-data, coarse synchronization data and fine synchronization data on one or several server(s);
- transmitting and receiving a second video stream containing the same video data as the first video stream but without meta-data;
- requesting the meta-data, coarse synchronization data and fine synchronization data from the one or several server(s);
- synchronizing the first and the second video stream in order to obtain frame accurate synchronization of the video streams; and
- inserting content into the second video stream according to the meta-data.

Advantageously, the method comprises the step of requesting content from a server before inserting the content into the second video stream.

In an embodiment of the invention it has been found useful to store information about user behavior and to insert content which is aligned with the information about user behavior.

The step of inserting content may comprise the step of replacing in a plurality of video frames a portion of the image by other content. Alternatively, the step of inserting content may comprise the step of replacing a plurality of video frames as a whole by other video frames.

According to an advantageous embodiment of the inventive method, the step of synchronizing the first and second video streams comprises the step of
- firstly, performing a coarse synchronization of the first and second video streams for obtaining a coarse synchronization result, and
- secondly, applying a fine synchronization to the coarse synchronization result for obtaining a fine synchronization result.

In the practical implementation of the inventive method the coarse synchronization is performed by means of audio fingerprints and the fine synchronization is performed by means of video fingerprints. The fine synchronization is applied to the result of the coarse synchronization. The result of this two-step approach is frame accurate synchronization of the two video streams. Advantageously, the two-step approach is executable by the computing resources that are available in a typical television receiver because the matching of video fingerprints is carried out on a limited number of frames only.

The step of inserting the content may also be executed on a server and/or in a computer cloud.

According to a second aspect, the present invention suggests an apparatus having a display comprising means to receive transmitted signals and computing means adapted to execute coarse synchronization between a first and a second video stream for obtaining a coarse synchronization result. The computing means are also adapted to apply a fine synchronization to the coarse synchronization result for obtaining a fine synchronization result. In different embodiments of the invention the apparatus is the television receiver, a mobile communication device or a computer.

In an advantageous development of the apparatus the computing means are adapted to execute synchronization by means of audio fingerprints between a first and a second video stream for obtaining a coarse synchronization result. The computing means are also adapted to apply a synchronization by means of video fingerprints to the coarse synchronization result for obtaining a fine synchronization result.

It has been found useful when the apparatus is provided with means to accumulate information about the viewer behavior.

An embodiment of the inventive apparatus is equipped with communication means to request and receive information about the viewer behavior from an external source. The apparatus can be adapted to store information about a plurality of viewers.

It has been found useful when the apparatus is provided with a memory for storing the information about viewer behavior.

### Short description of drawings

In the drawing an embodiment of the present invention is illustrated. In the figures similar or identical elements are identified with similar or identical reference signs. It shows:
Figure 1A and 1B the insertion of an advertisement as a text box in a video scene;
Figure 2 a schematic illustration of the broadcast chain;
Figures 3A and 3B a schematic example of advertisement insertion in a video scene;
Figure 4 a schematic block diagram of an implementation of the invention;
Figure 5 a schematic block diagram of a TV receiver as example for the inventive apparatus; and
Figure 6 a flow diagram describing the process steps for advertisement insertion.

### Detailed description

Figure 1A shows a screen 101 of a television receiver displaying images 102 of a soccer match. Figure 1B shows an advertisement which is inserted as a text box or banner 103 in the lower part in the image 102 displayed on the screen 101. A portion or the original video content is replaced by the text box 103. This process is also called keying, i.e. the advertisement is keyed into the original video frames. However, this simple approach disturbs the original images and the so created composed image is less appealing for the viewer, especially if the text box 103 covers an interesting detail of the original image.

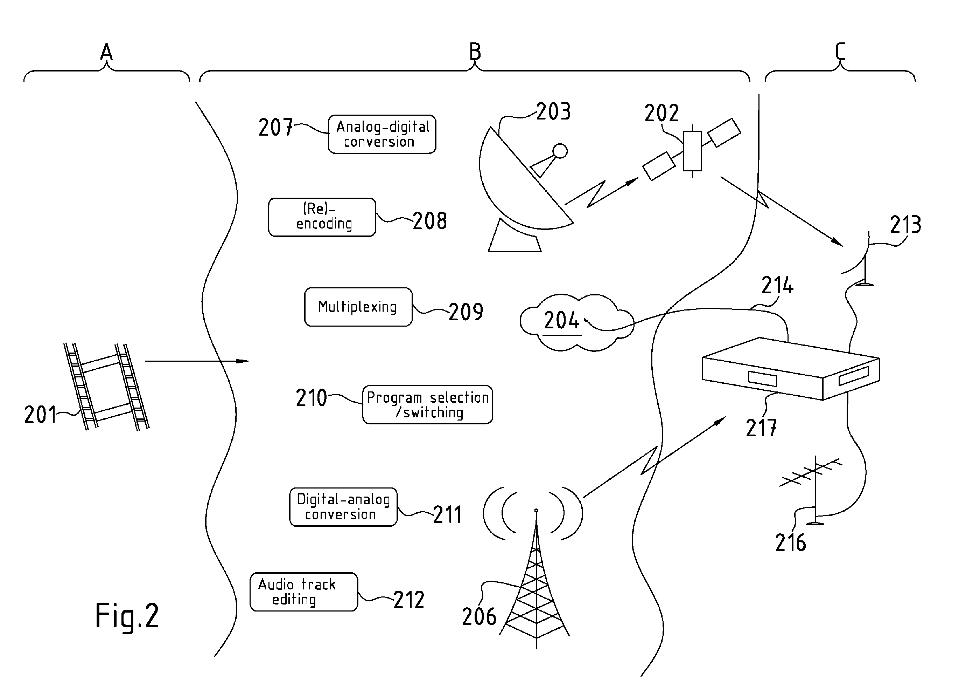

Even though the present invention is equally applicable in a broadcast as well as in a multicast environment, the principles of the invention are exemplarily described for broadcast technology at first. Examples of embodiments employing multicast technology will be presented towards the end of the description. Figure 2 schematically illustrates a video chain reaching from the content owner along the broadcast chain to the premises of a viewer. The realms of the content owner, the broadcast chain and the viewer are shown as distinct sections of figure 2 labeled with the reference signs A, B, and C, respectively. A film strip 201 symbolizes content bound to be broadcasted. In the present context the content is any kind of video and/or audio content which is suitable for being broadcasted as a program. In the entire specification of the present patent application, the term "program" refers to content which is transmitted to a viewer.

For broadcasting the content as a program there are several options. The first option is to send the program to a satellite 202 via satellite uplink antenna 203. The second option is to send the program to a cable network 204. The cable network 204 is an analog or digital serial network or a data network transmitting packetized data. The third option is to transmit the program via a terrestrial broadcast antenna 206.

In the process of being broadcasted the video content 201 typically undergoes several processing steps which are shown in figure 2 as blocks 207 to 212. It is to be noted that not necessarily every processing step shown in figure 2 is always executed but, conversely, there may be other processing steps not shown in figure 2 which are applied to a specific content. The processing may involve an analog-to-digital conversion 207, re-encoding 208, multiplexing 209, program selection/switching 210, digital to analog conversion 211, and audio track editing 212.

The viewer has the option to receive the content via a satellite dish antenna 213, a cable network access 214 and a terrestrial antenna 216 connected to a television receiver which is symbolized in figure 2 as a set-top box 217. The set-top box 217 or TV receiver has information characterizing the interests of the viewer, briefly called "user information". Optionally, the user information also includes other information related to the viewer's interest, such as geographical location of the set-top box 217, selected menu language, etc. The information is accumulated by the set-top box 217 itself, sent from a service provider or requested by the set-top box from a service provider. The information is stored in the set-top box 217 as a file or data base.

In another embodiment of the present invention the user information is stored outside the set-top box 217, e.g. in a storage device or server communicatively connected with the set-top box 217. It is not essential for the present invention where or in what kind of device the user information is stored. Essential is rather the fact that the set-top box 217 has access to the user information.

In an embodiment of the present invention the set-top box 217 stores such information for a plurality of users.

In the present patent application, the terms "television receiver" or "receiver" refer to any device which incorporates means for receiving an incoming video signal. Such kind of devices include, but are not limited to, television sets, video cassette recorders (VCRs), set-top boxes, PC cards, computers, smartphones etc. It is noted that all mentioned devices include a display and driver circuit for driving the display.

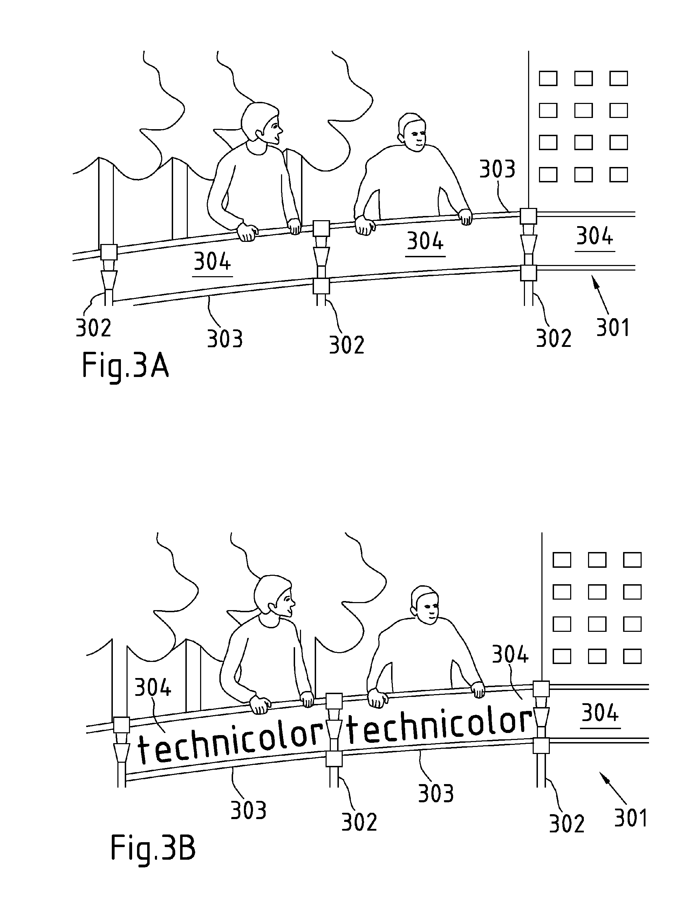

The plurality of processing steps within the broadcast chain frequently results in a loss of meta-data that is associated with the original content and in consequence it is no longer possible to insert advertisements at the right place in the right moment in a sequence of video frames. However, precise timing and positioning in the sense that the insertion of the advertisement is frame accurate, i.e. exactly in the frames that were specified by the meta-data, is essential. For a good quality impression of the viewer it is very important that the insertion does not take place one single frame to early or too late. The reason why this strict requirement is indispensable for the final sequence of video frames with inserted targeted content will be explained in connection with figures 3A and 3B.

Figure 3A shows a scene with two persons standing on a bridge having a railing 301. The scene is a sequence of video frames forming part of the program selected by the viewer. The TV receiver 217 holds information characterizing the interests of the viewer. The information enables the TV receiver 217 to select advertisements that are actually interesting for the viewer. This type of advertisements is also referred to as "targeted content". The TV receiver 217 receives frame information identifying frames and areas inside the frames that are appropriate for inserting targeted content.

The railing 301 shown in figure 3A is composed of posts 302 and rails 303 defining fields 304 in the railing 301. The fields 304 are identified as a suitable image area for advertisement insertion. Figure 3B shows the company name "technicolor" as advertisement in two fields 304. The word "technicolor" is only an example for an advertisement and any kind of alphanumeric or graphic presentation may be inserted in the fields 304. Also, the advertisement may be inserted only in one field 304 or in more than two fields 304 and also in other fields 304 than in those shown in figure 3B. In one embodiment of the present invention even a video clip is inserted as advertisement. But regardless of the content of the advertisement it is of utmost importance that the advertisement is inserted in a frame accurate manner, i.e. not one frame to early or too late. For the purpose of explanation let us assume that figure 3A shows a video frame out of a sequence of video frames created by a camera pan. In this case the positions of the fields 304 change slightly from frame to frame which means that the advertisement has to be inserted in each video frame at a slightly different position in order to fit properly into the fields 304 of the railing 301 as it is shown in figure 3B. If given position data of the advertisement is not matched with the right video frame, the advertisement is at least slightly displaced compromising the quality impression of the scene for the viewer. Similar problems occur when there is a so called "hard cut" between scenes, i.e. the image contents of frame number N is completely different from the image contents of frame number N-1 or N+1. Obviously, in the situation of a hard cut an advertisement that is adapted to frame number N is completely out of context in frame N-1 or N+1, respectively. Again, the viewer would get a bad quality impression of the composed image.

In general terms the described problem can be expressed as follows: The starting point is an original video v composed of a sequence of video frames fᵢ. In other words, the original video v represents a physical and mathematical quantity comprising the video frames fᵢ as elements v = {f₁, ..., fₙ}. A sub-quantity or subset F_{J} of these frames is appropriate for inserting or inlaying advertisements and is important for this reason, wherein F_{J} = {fₖ, ..., fₘ}. The subset F_{J} is identified in data called frame information. The transformations and the streaming of the video v along the broadcast chain introduce changes and the video v becomes video stream v'. The television receiver receives the video stream v' composed of frames fᵢ', i.e. v' = {f₁', ..., fₙ'}. According to the present invention the TV receiver 217 inserts in a subset of frames Fⱼ' corresponding to the identified frames F_{J} advertisements as targeted content based on the stored user information. Consequently, the TV receiver 217 has to match the already identified frames F_{J} = {fₖ, ..., fₘ} with the corresponding frames F_{J}' = {fₖ', ..., fₘ'} in the video stream v' to properly insert an advertisement. As long as all video transformations of v are perfectly controlled by one entity like a video game console it is relatively easy to do a frame accurate matching. Indeed, during these transformations it is possible to track which original frame corresponds to which transformed frame. This is no longer the case when video streams are broadcasted.

The present invention addresses the problem of frame accurate insertion without the availability of reliable or complete meta-data. As it was mentioned above, in the broadcast environment any marker in the broadcasted program has a risk to get lost. The only synchronization that imperatively has to be maintained by the broadcast service is the lip-sync between the audio and video in a program.

This is why known solutions use the audio track of the video to synchronize the two video streams v and v'. More precisely a server provides descriptions (also called fingerprints or signatures) of pieces of the audio track of video stream v. For each signature a server also provides the corresponding frame fᵢ. The video player extracts the audio signatures of the video v' and matches the signatures against all signatures provided by the server for that particular video. If two signatures are matching, the video player can map a received video frame fᵢ' to the original frame fᵢ.

Once this mapping is available it is easy to derive the frames F_{J}' that correspond to the frames F_{J}.

The advantage of this approach is that audio fingerprinting is not costly and can easily be carried out in real-time by a device such as a STB. The problem of this approach is that the synchronization achieved with the above technique has an accuracy of a few frames only because intrinsically lip-sync only guarantees a precision of few frames. E.g. if a video frame f_{M}' from the video stream v' is matched by audio fingerprints to a frame in the original video stream the results lies only in a range of a few frames to the actually corresponding video frame f_{M}.

A more advanced approach is described in the article "Synchronization of Multiple Camera Videos Using Audio - Visual Features" by Shrestha et al., IEEE transactions on multimedia, volume 12, No. 1, January 2010 pages 79 ff. The method described in this article claims that it is possible to synchronize videos from different sources with an accuracy of +-11.6 ms by means of audio-fingerprints but limited to the lowest frame rate. However, also this known method is not frame accurate.

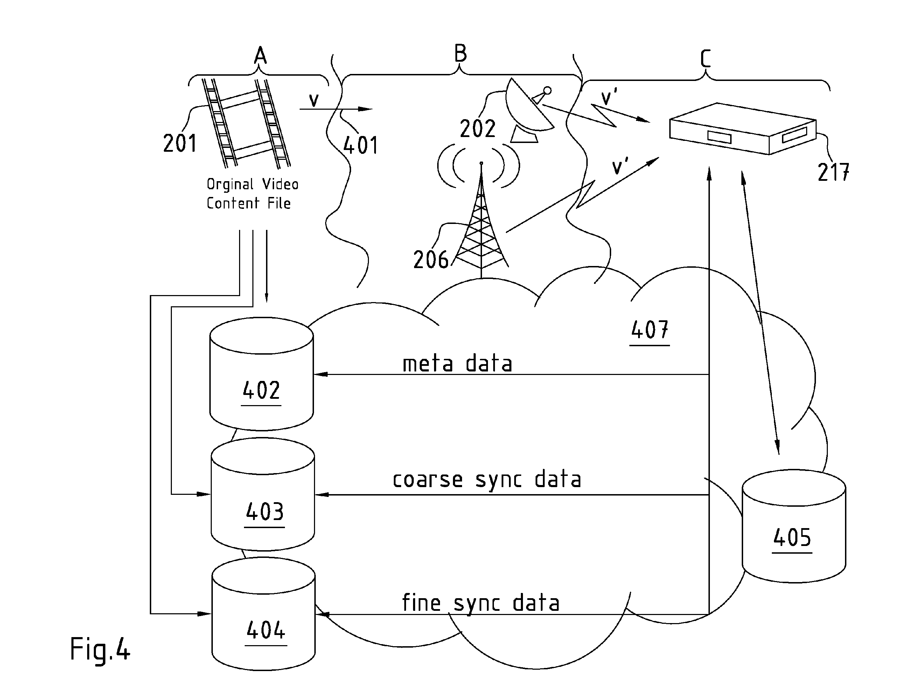

The method carried out by the present invention is illustrated in a block diagram shown in figure 4. The coarse frame synchronization uses state-of-the-art real time synchronization techniques based on audio-fingerprints. The content owner sends the original video v to the broadcast chain as it is indicated by arrow 401 reaching from the realm A of the content owner to the realm B of the broadcast chain. In addition to that, the content owner sends meta-data to a meta-data server 402 with frame numbers or time codes of images suitable for content insertion as well as coordinates of the image area appropriate for advertisement insertions inside the image. The content owner sends an audio fingerprint database for coarse frame synchronization to a server 403. Finally, the content owner sends a reference video fingerprint database for fine frame synchronization to a server 404. Meta-data, the fingerprint data bases for coarse and fine synchronization data are globally referred to as ancillary data.

In an alternative embodiment the functionalities of servers 402 to 404 are integrated into a single server.

When the television receiver 217 receives a video stream v' it determines if the currently played video offers opportunities to inlay advertisements by contacting the server 402 via a broadband connection and requests meta-data for the received video stream. The meta-data server 402 answers with meta-data required to carry out inlay operations: the frame numbers or time codes of images suitable for content inlay. Optionally, the server 402 also provides for each image in the identified image sequence, the coordinates of the inlay zone inside the image, geometrical distortion of the inlay zone, color map used, light setting etc. In order to be able to insert the advertisement based on the received meta-data the television receiver 217 synchronizes the received video stream v' with the time codes and/or frame numbers provided by the meta-data. In a first step a coarse frame synchronization using audio-fingerprints is carried out. Once synchronized with this technique, any frame f_{M}' currently played by the video player maps to a range of frames [f_{M-error/2}, f_{M+error/2}] of the reference video v, wherein the error is e.g. 5 frames. Thus, error/2 equals 2 or 3.

In a second step a fine synchronization technique is executed that only operates on the small set of frames [f_{k-error/2}, f_{k+error/2}] that was previously identified. More precisely, when the video player reads a frame f_{M}' that maps to a range or interval of frames [f_{M-error/2}, f_{M+error/2}], and if there exists an fi (f_{M-error/2} < fᵢ < _{fM+error/2}) with a description as video fingerprint provided by the server, the player tries to match each frame of the interval. Practically, the signature S(f_{M}) of video frame f_{M} is compared with the signature S(fᵢ) of each video frame contained in the quantity of video frames {f_{M-error/2}', f_{M+1-error/2}', ..., f_{M+error/2}'} in Short fᵢ ∈ {f_{M-error/2}', f_{M+1-error/2}', ..., f_{M+error/2}'}. In one embodiment the signatures S(f_{M}) and S(fᵢ) are combined with an XOR operator. The result of the XOR operation is true if the signatures are different and false if the signatures are identical. Hence, a frame accurate frame matching is enabled. The advantage of the process according to the invention is that frame accurate synchronization of the video streams is obtained with limited amount of processing power. Hence the synchronization is achievable on a of level of a consumer electronics device.

Once the above process is finished successfully, the stream is synchronized for every frame f_{M} > fi and the above mentioned goal to identify each frame fⱼ of the quantity F_{J} of the original video stream v with its corresponding frame fⱼ' in the video stream v' is achieved.

According to an embodiment of the present invention the TV receiver 217 performs the advertisement insertion itself. For this purpose the TV receiver 217 requests from a server 405 the coordinates of the inlay zone where the advertisement is to be placed and the advertisement itself. The communication between the servers 402 to 405 and the TV receiver is effected by a broadband communication network 407. The creation of a composed image based on the video frame fⱼ' in which in the inlay zone the original image content is replaced by the advertisement is performed by the computing power of the TV receiver 217. The composed video frames are denominated as f_{J}".

Even though the information what kind of advertisement is to be inserted is optionally provided by external resources it is the TV receiver 217 which executes the insertion process.

In another embodiment of the present invention the TV receiver 217 sends the video frames F_{J}' to the server 405 which performs the advertisement insertion into the video frames F_{J}' and sends the composed video frames F_{J}" back to the TV receiver 217. The TV receiver 217 replaces the video frames Fⱼ' by the video frames F_{J}" in the video stream v' for display.

In an alternative embodiment the insertion of the advertisement is performed in a cloud computer where the frames F_{J}" are optionally stored for later use. The composed frames F_{J}" are sent back to the TV receiver 217 where they replace corresponding frames F_{J}'.

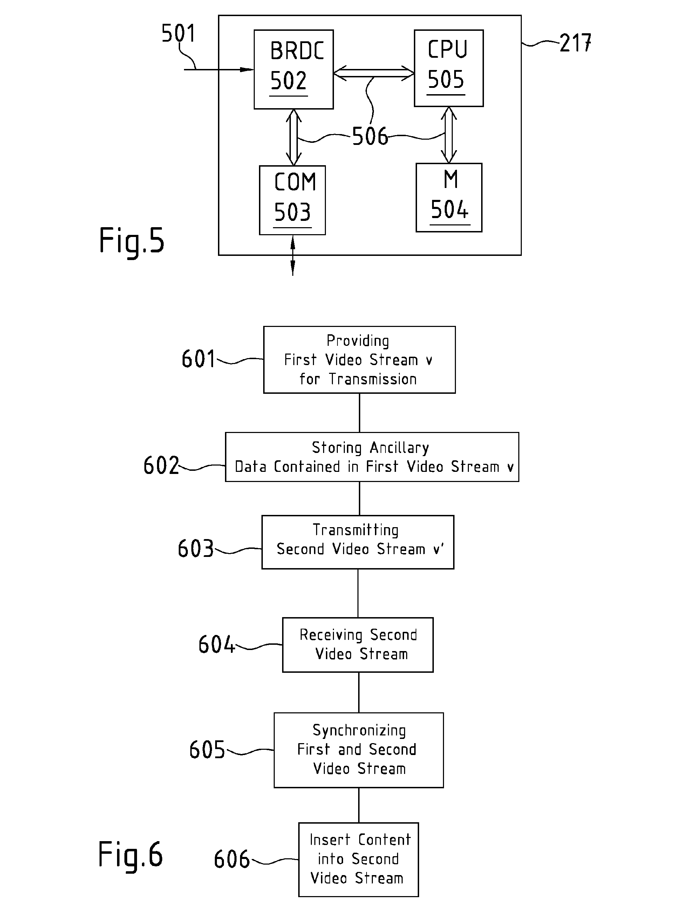

Fig. 5 shows a schematic block diagram of TV receiver 217. The TV receiver receives the broadcast signals at input 501 symbolizing all different kinds of inputs for broadcast signals already described with reference to Fig. 2. The receiver 217 comprises means for receiving broadcast signals 502 that receive and process broadcast signals that are ultimately displayed on a screen. The TV receiver 217 also comprises communication means 503 enabling the TV receiver to communicate with the broadband network 407. Data that is necessary to execute the present invention is stored in a memory 504, e.g. information about viewer behavior. A central processing unit (CPU) 505 controls all processes in the TV receiver. The components 502 to 505 are communicatively connected by a bi-directional bus 506.

Even though the components 502 to 505 are shown as separate components they can all or partially be integrated in a single component.

Fig. 6 shows a schematic flow diagram illustrating the method according to the present invention. In step 601 the first video stream v including its associated meta-data is provided for being transmitted. In step 602 the ancillary data comprising the meta-data, the fingerprint data bases for coarse and fine signalization associated with videos stream v are stored on the servers 402 to 404 as it is described with reference to Fig. 4. In step 603 the second video stream v' is transmitted as it is explained in connection with figure 2. The TV receiver 217 receives the transmitted second video stream v' in step 604 and executes the synchronization of the first and second video stream in step 605. Then, in step 606 advertisements are inserted into the video frames predetermined by the meta-data forming part of the ancillary data.

As a result the present invention enables frame accurate content insertion into transmitted video streams without relying on meta-data included in the video stream. It is noted that the viewer can skip the so inserted advertisements only by skipping a part of the content of the watched program. For most viewers this is not an option and therefore the inserted advertisements will reach the targeted audience.

The present invention is also applicable to smartphones, tablet computers or any other mobile communication device which provided with a display and which receives a video content that is multicasted, e.g. using Multimedia Broadcast Multicast Services (MBMS). MBMS is a point-to-multipoint interface specification for existing and upcoming 3GPP cellular networks. A more advanced technology is Evolved Multimedia Broadcast Multicast Services (eMBMS) based on 4G cellular networks. Target applications include mobile TV and radio broadcasting.

Likewise as in the broadcast chain, meta-data can get corrupted or lost in a multicast environment. Hence, the same problems that have been described in the context with broadcasted content need to be sold for inserting targeted content into the videos stream which is transmitted as multicast content.

The mobile communication device receives multimedia content via a cellular network and contacts via a communication network such as the Internet the servers 402 to 404 to receive the ancillary data to perform a frame accurate synchronization of the original video stream and the multicast video stream. In addition to that, the mobile communication device contacts via the communication network also the server 405 for receiving targeted content to be inserted into the multicasted video stream. The insertion is performed on the level of the mobile communication device. Alternatively, the mobile communication device contacts the server 405 to receive replacement frame F_{J}" to replace the frames F_{J}' in the transmitted video stream.

### List of reference signs

101 TV screen
102 image
103 textbox
201 film strip
202 satellite uplink antenna
203 satellite
204 cable network
206 terrestrial broadcast antenna
207-212 processing steps
213 satellite dish antenna
214 cable network access
216 terrestrial reception antenna
217 set-top box
301 railing
302 post
303 rail
304 field
401 send original video v
402 meta-data server
403 server for coarse synchronization fingerprint data
404 server for fine synchronization fingerprint data
405 server for coordinates and advertisement
407 broadband communication network
501 broadcast input
502 broadcast signal receiver means (BRDC)503 communication means (COM)
504 memory (M)
505 CPU
506 bus
601-606 processing steps
A realm of content owner
B realm of broadcast chain
C realm of viewer

## Claims

1. Method of content insertion into a transmitted video stream, wherein the method comprises the following steps:
- processing a first video stream (v) provided with meta-data;
- storing the meta-data, coarse synchronization data and fine synchronization data on one or several server(s) (402-404);
- transmitting and receiving a second video stream (v') containing the same video data as the first video stream (v) but without meta-data;
- requesting on the receiving side the meta-data, coarse synchronization data and fine synchronization data from the one or several server(s) (402-404);
- synchronizing the first and the second video stream (v, v') in order to obtain frame accurate synchronization of the video streams; and
- inserting content into the second video stream (v') according to the meta-data.

2. Method according to claim 1 further comprising the step of requesting content from a server before inserting the content into the second video stream (v').

3. Method according to claim 2 further comprising the steps
- storing information about user behavior; and
- inserting content which is aligned with the information about user behavior.

4. Method according to one of claims 1 to 3,
wherein the step of inserting content comprises the step of replacing in a plurality of video frames a portion of the image by other content.

5. Method according to one of claims 1 to 3,
wherein the step of inserting content comprises the step of replacing a plurality of video frames as a whole by other video frames.

6. Method according to one of claims 1 to 5,
wherein the step of synchronizing the first and second video streams (v, v') comprises the step of
- firstly, performing a coarse synchronization of the first and second video streams (v, v') for obtaining a coarse synchronization result, and
- secondly, applying a fine synchronization to the coarse synchronization result for obtaining a fine synchronization result.

7. Method according to one of claims 1 to 6, wherein the step of synchronizing the first and second video streams (v, v') comprises the step of
- firstly, synchronizing the first and second video streams (v, v') by means of audio fingerprints for obtaining a coarse synchronization result, and
- secondly, applying a synchronization by means of video fingerprints to the coarse synchronization result for obtaining a fine synchronization result.

8. Method according to one of claims 1 to 7, executing the step of inserting the content on a server (405) and/or on a cloud computer.

9. Apparatus having a display (101) comprising means (502) to receive transmitted video signals and computing means (505) adapted to execute coarse synchronization between a first and a second video stream (v, v') for obtaining a coarse synchronization result, wherein the computing means (505) are also adapted to apply a fine synchronization to the coarse synchronization result for obtaining a fine synchronization result.

10. Apparatus according to claim 9, wherein the computing means (505) are adapted to execute synchronization by means of audio fingerprints between a first and a second video stream (v, v') for obtaining a coarse synchronization result, wherein the computing means (505) are also adapted to apply a synchronization by means of video fingerprints to the coarse synchronization result for obtaining a fine synchronization result.

11. Apparatus according to claim 9 or 10, wherein the apparatus (217) is provided with means to accumulate information about the viewer behavior.

12. Apparatus according to claim 9 or 10, wherein the TV receiver is equipped with communication means (503) to request and receive information about the viewer behavior from an external source (402-405).

13. Apparatus according to claims 11 and 12,
wherein the apparatus stores information about a plurality of viewers.

14. Apparatus according to claim 12, wherein the apparatus (217) is provided with a memory (504) for storing the information viewer behavior.
